# EUROPEAN PATENT SPECIFICATION

(11) **EP 1 568 897 B1**
(45) Date of publication and mention of the grant of the patent: **18.07.2007**
(21) Application number: 03258061.5
(22) Date of filing: 19.12.2003
(51) Int. Cl.: F16B 5/10, F16B 21/04, F16B 21/02, F16B 37/04

(54) **One part receptacle for a fastener**
Einstückiges Aufnahmeelement für eine Befestigungsvorrichtung
Réceptacle en une pièce pour un moyen de fixation

(43) Date of publication of application: 31.08.2005
(73) Proprietor: Southco UK Limited, Warndon Worcester Worcestershire WR3 1FA (GB)
(72) Inventor: Churchill, Christopherc/o Dzus Fastener Europe Ltd, Farnham, Surrey GU9 9PL (GB)
(74) Representative: Lieke, Winfried

(56) References cited:
- EP-A- 0 348 064
- EP-A- 0 930 440
- GB-A- 582 628
- US-A- 2 464 422

## Description

The present invention is directed to a one part receptacle for a fastener for insertion, in use, into a hole in a receiving component, the receptacle comprising a base having a hole suitable for engaging, in use, with the fastener, the receptacle further comprising two retaining legs provided on opposite sides of the base.

A corresponding receptacle is known from EP 0 930 440 A1.

The present invention provides a one part receptacle for a fastener. The receptacle of the present invention provides a means by which a panel, such as a car noise shield or engine cover can be mounted onto a support by use of a fastener.

Receptacles for fasteners are well known in many fields, particularly in the automotive industry for use in mounting panels onto support materials.

An important factor which needs to be considered when designing a receptacle for a fastener is that during the use of the end product while the fastening needs to be secure, it also needs to include a degree of flexibility. When in use, an automobile is a high vibration environment and hence there is a need for a fastening which can tolerate such vibrations without causing any damage to the parts to which it is secured. It is clear that there is a need for a receptacle for a fastener specifically designed with such a high vibration environment in mind.

Many prior art receptacles are comprised of at least two components. This is because, when using such receptacles for fasteners of the prior art, in order to provide the necessary flexibility, an additional component such as a spring washer or grommet must be included. The reasoning behind the use of a separate receptacle for receiving a fastener is to increase the efficiency of the manufacturing process and reduce the number of time consuming operations which must be carried out manually on the production line. Inclusion of an additional component as is necessary in the prior art makes the manufacturing process both more complicated and more expensive. It would therefore be advantageous to provide a receptacle for a fastener which has an integrated spring mechanism such that no further components are required and the manufacturing process is both simpler and cheaper.

A further problem encountered in the prior art results when the component to which the receptacle for the fastener is attached and/or the component to be attached is not of uniform thickness. This can lead to a poor fit which not only results in a rattling noise during use but the fastening is not as secure and there is an increased likelihood that the fastening will work loose during use.

A variable thickness of the component or components can lead to a further problem. When using the receptacles for fasteners of the prior art, where one or both components are of a variable thickness, it is necessary to adjust the length of the fastener used to compensate for this variability and ensure that a secure fastening is achieved. This complicates the manufacturing process by causing both handling and stockholding problems. There is clearly a need for a receptacle for a fastener where a fastener of the same length can be used irrespective of the variable thickness of the component into which the receptacle is inserted and of the component to be attached.

The receptacle known from the above-mentioned EP 0 930 440 A1 is provided with a pair of retaining legs on opposite sides of the base, which are mainly extending in a direction along the direction of insertion of the fastener and include two returning portions which extend in the opposite direction in order to engage the backside of the receiving component. This allows a certain movement of the base with respect to the receiving component and is also arranged for a certain variation in the thickness for this component, however does not provide any adaptation to the thickness of the second component to be attached to said first components by means of an appropriate fastener.

In summary, it is therefore clear that there is a need for a single component receptacle for a fastener that can be securely fixed even where the components being attached to one another are of a non-uniform thickness and is sufficiently flexible that damage and rattling during use are avoided.

The present invention provides a one part receptacle for a fastener for insertion, in use, into a hole in a receiving component, the receptacle comprising a base with legs, at least one of the legs retaining the receptacle on a component in use, wherein the base includes a hole for engaging, in use, with the fastener and at least one of the legs is shaped to form a compliant mechanism which provides compliance in the direction of insertion of the fastener whereby, in use, the receptacle is inserted into the hole and retained thereon and provides compliance between the component on which it is retained and a second component attached thereto via the receptacle and fastener.

The purpose of the retaining leg is to ensure that the receptacle is locked firmly in position after it has been installed into the component.
Preferably such a locking mechanism is provided by legs which expand behind the component after installation.

In addition, the inclusion of at least one leg shaped to form a compliant mechanism ensures that the receptacle of the present invention has sufficient flexibility to be appropriate for use in a high vibration environment such as in an automobile. Also, the receptacle of the invention is arranged such that it can operate over a considerable range of component thickness and provide an over-centre retaining force for the fastener in use.

The fact that the compliant mechanism is included as an integral part of the one part receptacle means that there is no need to include additional components such as washers and grommets. Consequently the manufacturing process is simplified and costs are reduced. This is exemplified by the fact that the receptacle of the present invention can be easily fixed manually into a hole in a component by use of a hand tool.

The at least one leg shaped to form a compliant mechanism is designed such that, even in the situation where the component into which it is inserted or to which it is attached, is of variable thickness, a good fit will still be achieved. The inclusion of this compliant mechanism also means that it is not necessary to change the length of the fastener used to compensate for some variations in thickness. Hence the present invention overcomes the problems associated with the prior art in that a receptacle is provided that is a single component, is suitable for use in a high vibration environment and self adjusts to allow for a variation in the thickness of the components with which it is used.

At least one leg of the receptacle shaped to form a compliant mechanism is preferably comprised of at least one outer spring leg and an inner spring leg. It may be the inner spring leg which adjusts position to allow for a varying thickness of the component into which it is inserted and provides a retaining force thereon.

In a preferred example of the present invention, two of the legs, positioned on opposite sides of the base of the receptacle, are shaped to form a compliant mechanism to provide a compliant force in the direction of insertion of the fastener. A symmetrical arrangement is desirable as the resulting fastening is more secure.

In a further example the compliant mechanism comprises two outer legs and an inner spring leg. Preferably the end portion of the at least one outer spring leg is bent to form a wing extending laterally from the base such that, in use, the wing is positioned at an acute angle to the upper surface of the component into which it is inserted. More preferably the wing is positioned, in use, at an angle of about 30° to the upper surface of the component. Such positioning ensures that the required compliance is achieved. In such an example it is preferable that the lower portion of the outer spring leg extends in a direction substantially perpendicular to the base of the receptacle.

Where the at least one leg shaped to be a compliant mechanism comprises two outer legs and an inner leg, the outer legs may be separate or the end portions of the outer legs may be joined.

Where the at least one leg shaped to be a compliant mechanism comprises an inner compliant leg, this inner leg may be positioned at any point along the side of the base. In the example where the compliant mechanism comprises two outer legs, it is preferable that the inner leg is located centrally between the two outer legs.

Preferably the inner leg is positioned at an acute angle to the at least one outer leg. More preferably, the inner leg is positioned at an angle in the range 12-15° to the at least one outer leg. This ensures good retention on the component whilst providing good thickness tolerance.

Alternatively, in a example where the end portion of the outer leg is bent to form a wing extending laterally from the base, the end portion of the inner leg may also be bent back on itself to form a wing extending from the base at an acute angle to the vertical portion of the outer leg which extends in a direction substantially parallel to the direction of the direction of insertion of the fastener, such that, in use, the end portion of the inner leg is positioned at an acute angle to the end portion of the outer leg. In this example, in use, the end portions of the legs bias the receptacle against the underside of the material to be attached to the component into which the receptacle is inserted. In such an example it is preferable that the lower portion of the inner leg extends in a direction substantially perpendicular to the base of the receptacle.

The one part receptacle for a fastener of the present invention is preferably formed from metal. More preferably, however, the receptacle is formed from carbon steel.

The receptacle of the present invention may be used with any fastener. The hole in the base is altered depending on the nature of the fastener to be engaged in use. Preferably the fastener is a quarter turn fastener.

The present invention also provides a fastener and receptacle combination comprising the receptacle as described previously which is installed into a hole in a component and a fastener which is engaged with the hole in the base of the receptacle.

The present invention provides a means by which a panel can be mounted onto a support material. In one example of the present invention, a panel may be pre-mounted on to the receptacle prior to installation into the component to further improve the manufacturing process. Preferably the panel is a car noise shield or engine cover. The panel is preferably made of plastic with a thickness in the range of 2-3mm.

Two examples of the present invention are now described with reference to the following figures, in which:-
Figure 1 is a side view of a first example of the one part receptacle for a fastener of the present invention;
Figure 2 is a side view of a first example of the receptacle installed into a component;
Figure 3 is a side view of a first example in which a panel has been attached to a component by engaging a fastener with the receptacle installed in the component;
Figure 4 is a plan view of a first example of the one part receptacle for a fastener of the present invention;
Figure 5 is a side view of a second example of the one part receptacle for a fastener of the present invention;
Figure 6 is a side view of a second example of the receptacle installed into a component;
Figure 7 is a side view of a second example in which a panel has been attached to a component by engaging a fastener with the receptacle installed in the component; and
Figure 8 is a plan view of a second example of the one part receptacle for a fastener of the present invention.

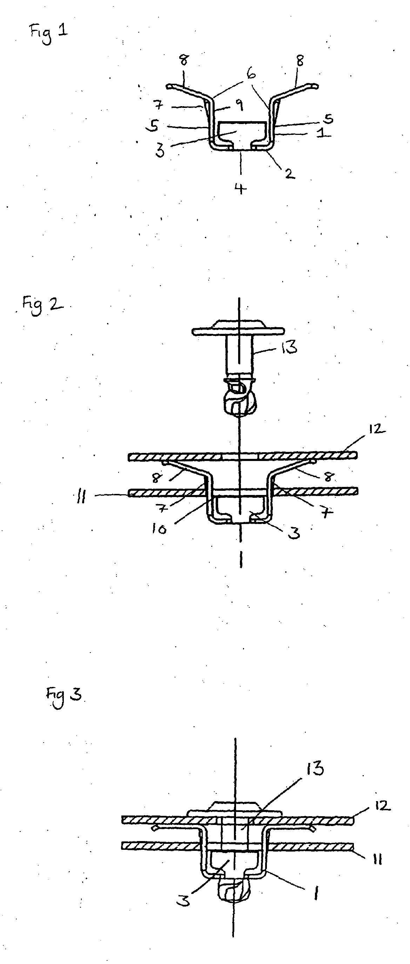

A first example of the one part receptacle of the present invention is illustrated by Figures 1-4. A square base 2 and two retaining legs 3 are provided on opposite sides of the base 2 and are paddle shaped and extend in a direction opposite to the direction of insertion of the fastener from the base 2 of the receptacle 1. The base 2 contains a hole 4 suitable for engaging, in use, with a quarter turn fastener (13-Figure 2). Two further legs 5, opposite one another on the remaining sides of the base 2 are each shaped to form a compliant mechanism which provides a compliant retaining force in the direction of insertion of the fastener. Each spring mechanism is, in this example, the same and comprises two outer legs 6 and an inner central spring leg 7. The end portions 8 of the outer legs 6 which extend laterally outwards from the base 2 are joined to form a "C shaped" wing section as shown in Figure 4. The inner spring leg 7 extends in a direction opposite to the direction of insertion of the fastener from the base 2 and is positioned, in this example, at an angle in the range 12-15° to the vertical sections 9 of the outer legs 6 which extend in a direction substantially parallel to the direction of insertion. This provides a secure retention on component 11, which resists forces applied to end portions 8, and which is tolerant of changes in the thickness of component 11 as well as providing vibration resistance.

In use, upon inserting the receptacle 1 into a substantially square hole 10 in a component 11, the retaining legs 3 extend outwards to lock the receptacle 1 in place. After insertion, the position of the central spring leg 7 adjusts to allow for any variation in the thickness of the component 11 and the wing portions 8 of the outer legs 6 are positioned at an angle of approximately 30° to the upper surface of the component 11. In this position the outer legs 6 act as a compliant element in the direction of insertion of the fastener and hence ensure that the fastening has the desired flexibility.

As illustrated in Figure 3, in use, a panel 12 is attached to the component 11 by engaging a quarter turn fastener 13 with the hole 4 in the base 2 of the receptacle 1 installed into the component 11. The compliant end portions 8 of outer legs 6 adjust so as to allow a secure fastening which still has sufficient flexibility to tolerate a high vibration environment. The compliant force generated by this also provides the fastener 13 with the necessary overcentering to retain it in place and allow for the arrangement to work on a wide range of panel thickness.

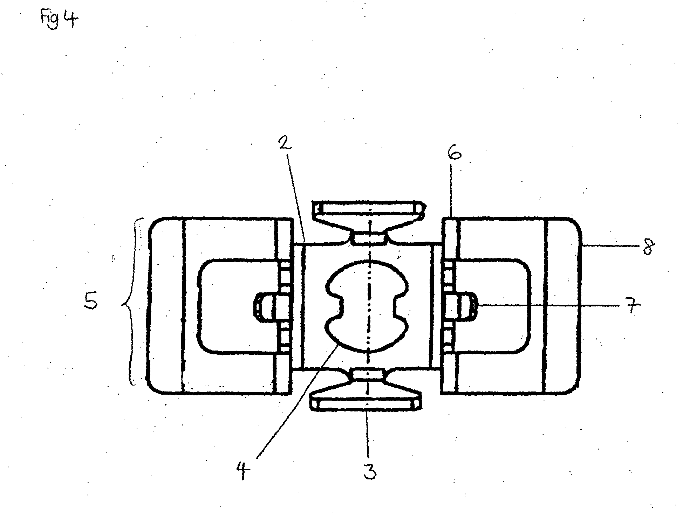

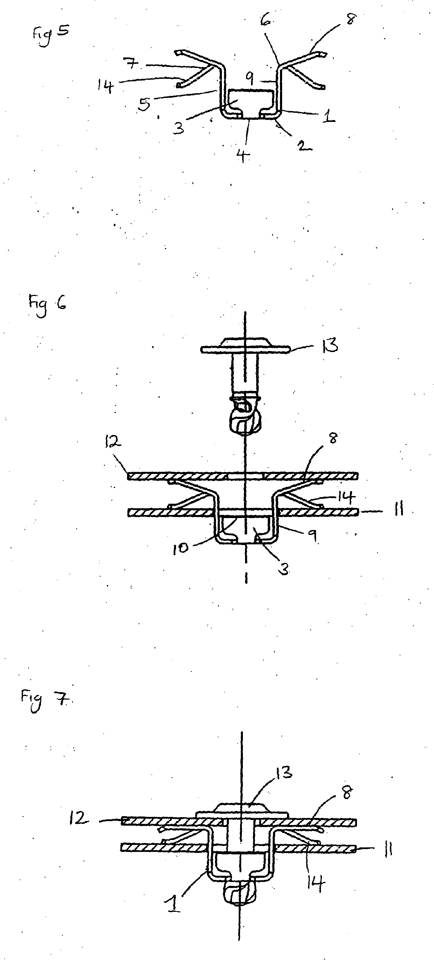

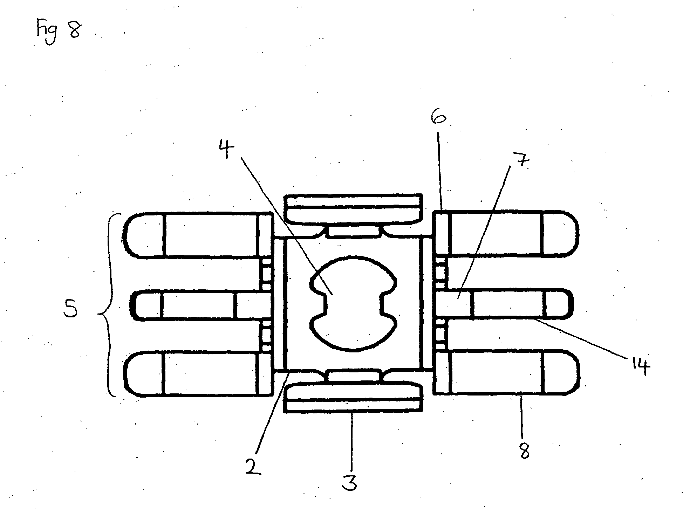

A second example of the present invention is illustrated in Figures 5-8. As in the first example, the receptacle 1 comprises a square base 2 and two retaining legs 3 are provided on opposite sides of the base 2 and are paddle shaped and extend in a direction opposite to the direction of insertion of the fastener from the base 2 of the receptacle 1. The base 2 again contains a hole 4 suitable for engaging, in use, with a quarter turn fastener (13-Figure 6). Two further legs 5, opposite one another on the remaining sides of the base, are each shaped to form a compliant mechanism which provides a compliant retaining force during insertion of the fastener. In this example, each mechanism is the same and comprises two outer legs 6 and an inner central leg 7. The end portions 8 of the outer legs 6 extend laterally from the base as shown in Figure 8. The end portion 14 of the inner spring leg 7 is bent back on itself to form a wing extending from the base at an acute angle to the vertical portions 9 of the outer spring legs 6 which extend in a direction substantially parallel to the direction of insertion. This again ensures a secure retaining force on component 11 which is resistant to forces applied to end portions 8 and tolerant to variations in thickness of component 11.

In use, upon inserting the receptacle 1 into a substantially square hole 10 in the component 11, the retaining legs 3 extend outwards to lock the receptacle 1 in position. After insertion, in this example, the end portion 14 of the inner leg is positioned at an acute angle to the portion 9 of the outer legs.

As in the first example, in use, a panel 12 is attached to the component 11 by engaging a quarter turn fastener 13 with the hole 4 in the receptacle 1 installed in the component 11 as can be seen in Figure 7. In this example the relative positioning of the end portion 14 of the inner leg and the end portion 8 of the outer leg adjusts such that the acute angle between them is decreased, providing compliance to compensate for panel 12 and component 11 thickness variations and a force which absorbs vibration forces. Again this force also retains the fastener in its engaged position. Because this example engages on the surface of both component 11 and panel 12 improved vibration resistance is achieved, and a secure fastening results which still has sufficient flexibility to tolerate a high vibration environment.

## Claims

1. A one part receptacle (1) for a fastener (13) for insertion, in use, into a hole (10) in a receiving component (11), the receptacle comprising a base (2) having a hole (4) suitable for engaging, in use, with the fastener (13) the receptacle (1) further comprising two retaining legs (3) provided on opposite sides of the base (2), **characterized in that** the receptacle (1) further comprises:
said two retaining legs (3) extending in a direction opposite to the direction of insertion of the fastener (13) from the base (2) of the receptacle (1);
two further legs (5), opposite one another on the remaining sides of the base (2), each forming a spring mechanism,
wherein each said spring mechanism comprises two outer legs (6) and an inner central spring leg (7), each of said outer legs (6) having an end portion (8) that extends laterally outwards from the base (2),
wherein said inner central spring legs (7) and said retaining legs (3) provide a secure retention of the receptacle (1) on the receiving component (11), which resists forces applied to said end portions (8) of said outer spring legs (6), and which is tolerant of changes in the thickness of the receiving component (11), and
wherein, in use, a panel (12) is attached to the receiving component (11) by engaging a fastener (13) with said hole (4) in said base (2) of the receptacle (1) installed into the receiving component (11), said compliant end portions (8) of said outer legs (6) engage the panel (12) adjustably so as to work on a wide range of thickness for panel (12) and to allow a secure fastening which still has sufficient flexibility to tolerate a high vibration environment.

2. The receptacle according to claim 1, wherein the fastener (13) is a quarter-turn fastener and said hole (4) is suitable for engaging with the quarter-turn fastener (13), and wherein a compliant force generated by the engagement of said compliant end portions (8) of said outer legs (6) with the panel (12) provides the fastener (13) with the necessary over-centering to retain the fastener (13) in place.

3. The receptacle according to any one of claims 1 and 2, wherein said end portions (8) of said outer legs (6) are joined to form a "C-shaped" wing portion.

4. The receptacle according to any one of claims 1 through 3, wherein each of said outer legs (6) has a vertical section (9), and wherein each said inner spring leg (7) extends in a direction opposite to the direction of insertion of the fastener (13) from said base (2) and is positioned at an angle in the range 12-15° to the vertical sections (9) of the outer legs (6), which extend in a direction substantially parallel to the direction of insertion, such that the engagement between the inner spring legs (7) and the receiving component (11) is tolerant of changes in the thickness of the receiving component (11).

5. The receptacle according to any one of claims 1 through 4, wherein said retaining legs (3) are paddle shaped, wherein upon inserting the receptacle (1) into a substantially square hole (10) in the receiving component (11), the retaining legs (3) extend outwards to lock the receptacle (1) in place, and wherein, after insertion, the position of the central spring legs (7) adjusts to allow for any variation in the thickness of the receiving component (11).

6. The receptacle according to claim 5, wherein said wing portions (8) of the outer legs (6) are positioned at an angle of approximately 30° to the upper surface of the receiving component (11) after insertion of the receptacle (1) into the hole (10), and wherein said outer legs (6) act as a compliant element in the direction of insertion of the fastener (13) and hence ensure that the fastening has the desired flexibility.

7. The receptacle according to claim 1, wherein said outer spring legs (6) have vertical portions (9) that extend in a direction substantially parallel to the direction of insertion, wherein each said inner spring leg (7) has an end portion (14) that is bent back on itself to form a wing extending laterally on either side of said base (2) at an acute angle to said vertical portions (9) of said outer spring legs (6) to thereby provide a secure retention of the receptacle (1) on the receiving component (11), which resists forces applied to said end portions (8) of said outer spring legs (6), and which is tolerant of changes in the thickness of the receiving component (11).

8. The receptacle according to claim 7, wherein upon inserting the receptacle (1) into a substantially square hole (10) in the receiving component (11), said retaining legs (3) extend outwards to lock the receptacle (1) in position, and after insertion the end portions (14) of the inner spring legs (7) are positioned at acute angles to the vertical portions (9) of the outer spring legs (6) and engage the receiving component (11) on the surface opposite that engaged by the retaining legs (3), and
wherein, in use, the end portions (14) of the inner spring legs (7) and the end portions (8) of the outer spring legs (6) engage on opposing surfaces of the receiving component (11) and the panel (12), respectively, which results in a secure fastening that still has sufficient flexibility to tolerate a high vibration environment, and the relative positioning of the end portions (14) of the inner spring legs (7) and the end portions (8) of the outer spring legs (6) adjusts such that the acute angle between them is varied to compensate for variations in thickness of the panel (12) or the receiving component (11).

9. The receptacle according to any one of claims 7 and 8, wherein the fastener (13) is a quarter-turn fastener and said hole (4) is suitable for engaging with the quarter-turn fastener (13), and wherein a compliant force generated by the engagement of said compliant end portions (8) of said outer legs (6) with the panel (12) provides the fastener (13) with the necessary over-centering to retain the fastener (13) in place.

10. The receptacle according to any one of claims 8 and 9, wherein said retaining legs (3) are paddle shaped.

## Patentansprüche

1. Aus einem Stück bestehendes Aufnahmeelement (1) für ein Befestigungselement (13),
wobei das Aufnahmeelement im Gebrauch in einem Loch (10) in einem aufnehmenden Bauteil (11) vorgesehen ist, das Aufnahmeelement ein Basisteil (2) mit einem Loch (4) aufweist, welches dafür geeignet ist, im Gebrauch mit dem Befestigungselement (13) in Eingriff zu treten, und das Aufnahmeelement (1) weiterhin zwei Halteschenkel (3) aufweist, die auf gegenüberliegenden Seiten des Basisteiles (2) vorgesehen sind,
**dadurch gekennzeichnet, dass** das Aufnahmeelement (1) weiterhin die Merkmale aufweist, dass
sich die beiden Halteschenkel (3) von dem Basisteil (2) des Aufnahmeelementes (1) aus in einer Richtung entgegengesetzt zu der Richtung des Einführens des Befestigungselementes (13) erstrecken,
zwei weitere Schenkel (5), die einander gegenüberliegend auf den verbleibenden Seiten des Basisteils (2) vorgesehen sind, jeweils einen Federmechanismus bilden,
wobei jeder derartige Federmechanismus zwei äußere Schenkel (6) und einen inneren zentralen Federschenkel (7) aufweist, und jeder der äußeren Schenkel (6) einen Endabschnitt (8) hat, der sich von dem Basisteil (2) seitlich nach außen erstreckt,
wobei die inneren zentralen Federschenkel (7) und die Halteschenkel (3) einen sicheren Halt des Aufnahmeelementes (1) an dem aufnehmenden Bauteil (11) bieten, welcher Kräften widersteht, die an den Endabschnitten (8) der äußeren Federschenkel (6) angreifen, und Veränderungen in der Dicke des aufnehmenden Bauteils (11) toleriert, und
wobei im Gebrauch eine Platte (12) an dem aufnehmenden Bauteil (11) angebracht wird, indem ein Befestigungselement (13) mit dem Loch (4) in dem Basisteil (2) des Aufnahmeelementes (1) in Eingriff gebracht wird, welches in dem aufnehmenden Bauteil (11) installiert ist, wobei die nachgiebigen Endabschnitte (8) der äußeren Schenkel (6) mit der Platte (12) in anpassbarer Weise in Eingriff treten, so dass sie über einen weiten Bereich von Dicken der Platte (12) funktionieren und eine sichere Befestigung erlauben, die dennoch eine ausreichende Flexibilität hat, um eine Umgebung mit starken Vibrationen zu tolerieren.

2. Aufnahmeelement nach Anspruch 1, wobei das Befestigungselement (13) ein Befestigungselement mit Vierteldrehung ist und wobei das Loch (4) für den Eingriff mit dem Befestigungselement (13) mit Vierteldrehung geeignet ist, und wobei eine nachgiebige Kraft, die durch den Eingriff der nachgiebigen Endabschnitte (8) der äußeren Schenkel (6) mit der Platte (12) erzeugt wird, das Befestigungselement (13) mit der erforderlichen Verriegelungswirkung durch Hinweggehen über einen Totpunkt versieht, um das Befestigungselement (13) an seinem Platz zu halten.

3. Aufnahmeelement nach einem der Ansprüche 1 und 2, wobei die Endabschnitte (8) der äußeren Schenkel (6) miteinander verbunden sind, um einen "C"-förmigen Flügelabschnitt zu bilden.

4. Aufnahmeelement nach einem der Ansprüche 1 bis 3, wobei jeder der äußeren Schenkel (6) einen vertikalen Abschnitt (9) hat, und wobei jeder innere Federschenkel (7) sich von dem Basisteil (2) aus in einer Richtung entgegengesetzt zu der Richtung des Einführens des Befestigungselementes (13) erstreckt und unter einem Winkel im Bereich von 12 bis 15 ° relativ zu den vertikalen Abschnitten (9) der äußeren Schenkel (6) angeordnet ist, die sich in einer Richtung erstrecken, welche im wesentlichen parallel zu der Richtung des Einführens ist, so dass der Eingriff zwischen den inneren Federschenkeln (7) und dem aufnehmenden Bauteil (11) Veränderungen in der Dicke des aufnehmenden Bauteils (11) toleriert.

5. Aufnahmeelement nach einem der Ansprüche 1 bis 4, wobei die Halteschenkel (3) paddelförmig sind, wobei die Halteschenkel (3), nach dem Einsetzen des Aufnahmeelementes (1) in ein im wesentlichen rechteckiges Loch (10), in dem aufnehmenden Bauteil (11) sich nach außen erstrecken, um das Aufnahmeelement (1) an seinem Platz zu halten, und wobei nach dem Einsetzen die Position der zentralen Federschenkel (7) für eine derartige Einstellung sorgt, dass eine beliebige Variation in der Dicke des aufnehmenden Bauteils (11) möglich ist.

6. Aufnahmeelement nach Anspruch 5, wobei die Flügelabschnitte (8) der äußeren Schenkel (6) unter einem Winkel von etwa 30 ° relativ zu der oberen Fläche des aufnehmenden Bauteils (11) nach dem Einsetzen des Aufnahmeelementes (1) in dem Loch (10) angeordnet sind, und wobei die äußeren Schenkel (6) als ein nachgiebiges Element in Richtung des Einsetzens des Befestigungselementes (13) wirken und damit sicherstellen, dass die Befestigung die gewünschte Flexibilität hat.

7. Aufnahmeelement nach Anspruch 1, wobei die äußeren Federschenkel vertikale Abschnitte (9) haben, die sich im wesentlichen parallel zur Richtung des Einführens erstrecken, wobei jeder der inneren Federschenkel (6) einen Endabschnitt (14) hat, der auf sich selbst zurückgebogen ist, um einen Flügel zu bilden, der sich seitlich auf jeder Seite des Basisteiles (2) unter einem spitzen Winkel zu den vertikalen Abschnitten (9) der äußeren Federschenkel (6) erstreckt, um **dadurch** einen sicheren Halt des Aufnahmeelementes (1) an dem aufnehmenden Bauteil (11) zu bieten, welcher Kräften widersteht, die auf die Endabschnitte (8) der äußeren Federschenkel (6) aufgebracht werden, und gegenüber Veränderungen in der Dicke des aufnehmenden Bauteiles (11) tolerant ist.

8. Aufnahmeelement nach Anspruch 7, wobei die Halteschenkel (3) nach dem Einsetzen des Aufnahmeelementes (1) in ein im wesentlichen rechteckiges bzw. quadratisches Loch in dem aufnehmenden Bauteil (11) sich nach außen erstrecken, um das Aufnahmeelement (1) in seiner Position zu halten, und wobei nah dem Einsetzen die Endabschnitte (14) der inneren Federschenkel (7) unter spitzen Winkeln relativ zu den vertikalen Abschnitten (9) der äußeren Federschenkel (6) angeordnet sind und mit dem aufnehmenden Bauteil (11) auf der Oberfläche in Eingriff treten, die derjenigen gegenüberliegt, an welcher die Halteschenkel (3) eingreifen, und
wobei im Gebrauch die Endabschnitte (14) der inneren Federschenkel (1) und die Endabschnitte (8) mit gegenüberliegenden Oberflächen des aufnehmenden Bauteils (11) bzw. der Platte (12) in Eingriff treten, was zu einer sicheren Befestigung führt, die dennoch eine ausreichende Flexibilität hat, um eine Umgebung mit starken Vibrationen zu tolerieren, und wobei die relative Positionierung der Endabschnitte (14) der inneren Federschenkel (7) und der Endabschnitte (8) der äußeren Federschenkel (6) für eine derartige Einstellung sorgen, dass der spitze Winkel zwischen ihnen variiert, um Variationen in der Dicke der Platten (12) oder des aufnehmenden Bauteils (11) zu kompensieren.

9. Aufnahmeelement nach einem der Ansprüche 7 oder 8, wobei das Befestigungselement (13) ein Befestigungselement mit Vierteldrehung ist und wobei das Loch (4) für den Eingriff mit dem Befestigungselement mit Vierteldrehung (13) geeignet ist, und wobei eine nachgiebige Kraft, welche durch den Eingriff der nachgiebigen Endabschnitte (8) der äußeren Schenkel (6) mit der Platte (12) erzeugt wird, das Befestigungselement mit der erforderlichen Verriegelungs- bzw. Rastwirkung durch Hinweggehen über einen Totpunkt versieht, um das Befestigungselement (13) an seinem Platz zu halten.

10. Aufnahmeelement nach einem der Ansprüche 8 oder 9, wobei die Halteschenkel (3) paddelförmig sind.

## Revendications

1. Réceptacle (1) en une seule pièce destiné à un organe de fixation (13) destiné à être inséré, pendant l'utilisation, dans un trou (10) formé dans un élément (11) de réception, le réceptacle comprenant une base (2) ayant un trou (4) qui convient à une coopération, pendant l'utilisation, avec l'organe de fixation (13), le réceptacle (1) comprenant en outre deux branches (3) de retenue disposées sur des côtés opposés de la base (2), **caractérisé en ce que** le réceptacle (1) comporte en outre :
les deux branches de retenue (3) qui s'étendent en sens opposé au sens d'insertion de l'organe de fixation (13) depuis la base (2) du réceptacle (1), et
deux branches supplémentaires (5), opposées l'une à l'autre sur les côtés restants de la base (2), chacune formant un mécanisme à ressort,
dans lequel chaque mécanisme à ressort comprend deux branches externes (6) et une branche centrale interne (7) de ressort, chacune des branches externes (6) ayant une partie d'extrémité (8) qui s'étend latéralement vers l'extérieur depuis la base (2),
dans lequel les branches centrales internes (7) de ressort et les branches de retenue (3) assurent une retenue ferme du réceptacle (1) sur l'élément de réception (11), qui résiste aux forces appliquées aux parties (8) d'extrémité des branches externes (6) de ressort et qui tolère les variations d'épaisseur de l'élément (11) de réception, et
dans lequel, pendant l'utilisation, un panneau (12) est fixé à l'élément (11) de réception par coopération d'un organe de fixation (13) avec le trou (4) de la base (2) du réceptacle (1) installée dans l'élément (11) de réception, et les parties élastiques d'extrémité (8) des branches externes (6) coopèrent avec le panneau (12) de manière réglable afin qu'elles travaillent sur une large plage d'épaisseur du panneau (12) et permettent une fixation robuste tout en ayant une flexibilité suffisante pour tolérer un environnement à vibrations élevées.

2. Réceptacle selon la revendication 1, dans lequel l'organe de fixation (13) est un organe de fixation à rotation d'un quart de tour et le trou (4) est destiné à coopérer avec l'organe de fixation (13) à rotation d'un quart de tour, et dans lequel une force élastique créée par la coopération des parties élastiques (8) d'extrémité des branches externes (6) avec le panneau (12) donne à l'organe de fixation (13) le décentrage nécessaire à la retenue en position de l'organe de fixation (13).

3. Réceptacle selon l'une quelconque des revendications 1 et 2, dans lequel les parties d'extrémité (8) des branches externes (6) sont raccordées pour former une partie d'aile à forme en C.

4. Réceptacle selon l'une quelconque des revendications 1 à 3, dans lequel chacune des branches externes (6) a un tronçon vertical (9), et dans lequel chaque branche interne (7) de ressort s'étend en sens opposé au sens d'insertion de l'organe de fixation (13) depuis la base (2) et est disposé suivant un angle compris entre 12 et 15° par rapport aux tronçons verticaux (9) des branches externes (6) qui s'étendent en direction pratiquement parallèle à la direction d'insertion, si bien que la coopération entre les branches interne (7) de ressort et l'élément (11) de réception tolère les variations d'épaisseur de l'élément (11) de réception.

5. Réceptacle selon l'une quelconque des revendications 1 à 4, dans lequel les branches de retenue (3) ont une forme de palette, dans lequel, après insertion du réceptacle (1) dans un trou pratiquement carré (10) formé dans l'élément (11) de réception, les branches de retenue (3) s'étendent vers l'extérieur pour bloquer le réceptacle (1) en position, et dans lequel, après l'insertion, la position des branches centrales (7) de ressort s'ajuste pour permettre toute variation de l'épaisseur de l'élément (11) de réception.

6. Réceptacle selon la revendication 5, dans lequel les parties (8) d'aile des branches externes (6) sont disposées suivant un angle d'environ 30° par rapport à la surface supérieure de l'élément (11) de réception après l'insertion du réceptacle (1) dans le trou (10), et dans lequel les branches externes (6) agissent à la manière d'un élément élastique dans la direction d'insertion de l'organe de fixation (13) et assurent ainsi la flexibilité voulue de la fixation.

7. Réceptacle selon la revendication 1, dans lequel les branches externes (6) de ressort ont des parties verticales (9) qui s'étendent en direction pratiquement parallèle à la direction d'insertion, dans lequel chaque branche interne (7) de ressort a une partie d'extrémité (14) qui est repliée sur elle-même pour former une aile qui s'étend latéralement de part et d'autre de la base (2) en formant un angle aigu avec les parties verticales (9) des branches externes (6) de ressort pour assurer ainsi une retenue ferme du réceptacle (1) sur l'élément (11) de réception, qui résiste aux forces appliquées aux parties d'extrémité (8) des branches externes (6) de ressort et qui tolère les variations d'épaisseur de l'élément (11) de réception.

8. Réceptacle selon la revendication 7, dans lequel, après insertion du réceptacle (1) dans un trou pratiquement carré (10) formé dans l'élément (11) de réception, les branches de retenue (3) s'étendent vers l'extérieur pour bloquer le réceptacle (1) en position et, après insertion, les parties d'extrémité (14) des branches internes (7) de ressort sont positionnées suivant des angles aigus par rapport aux parties verticales (9) des branches externes (6) de ressort et coopèrent avec l'élément (11) de réception à la surface opposée à celle qui coopère avec les branches de retenue (3), et
dans lequel, pendant l'utilisation, les parties d'extrémité (14) des branches internes (7) de ressort et les parties d'extrémité (8) des branches externes (6) de ressort coopèrent à des surfaces opposées de l'élément (11) de réception et du panneau (12) respectivement, en assurant une fixation ferme qui présente encore une flexibilité suffisante pour tolérer un environnement de vibrations élevées, et le positionnement relatif des parties d'extrémité (14) des branches internes (7) de ressort et des parties d'extrémité (8) des branches externes (6) de ressort s'ajustent de manière que l'angle aigu qu'elles forment varie pour compenser les variations d'épaisseur du panneau (12) ou de l'élément (11) de réception.

9. Réceptacle selon l'une quelconque des revendications 7 et 8, dans lequel l'organe de fixation (13) est un organe de fixation par rotation d'un quart de tour et le trou (4) est destiné à coopérer avec l'organe de fixation (13) par rotation d'un quart de tour, et dans lequel une force d'élasticité créée par la coopération des parties élastiques d'extrémité (8) des branches externes (6) avec le panneau (12) donne à l'organe de fixation (13) le décentrage nécessaire pour retenir en position l'organe de fixation (13).

10. Réceptacle selon l'une quelconque des revendications 8 et 9, dans lequel les branches de retenue (3) ont une forme de palette.
